# EUROPÄISCHE PATENTSCHRIFT

(11) **EP 2 037 163 B1**
(45) Veröffentlichungstag und Bekanntmachung des Hinweises auf die Patenterteilung: **31.03.2010**
(21) Anmeldenummer: 07017779.5
(22) Anmeldetag: 11.09.2007
(51) Int. Cl.: F16K 31/10

(54) **Vorrichtung zum Versorgen**
Supply device
Dispositif d'alimentation

(43) Veröffentlichungstag der Anmeldung: 18.03.2009
(73) Patentinhaber: HAWE Hydraulik SE, 81673 München (DE)
(72) Erfinder: Neumair, Georg, 85402 Thalhausen (DE); Zwingler, Engelbert, 85625 Antholing (DE)
(74) Vertreter: Grünecker, Kinkeldey, Stockmair & Schwanhäusser Anwaltssozietät

(56) Entgegenhaltungen:
- DE-A1- 4 317 706
- DE-A1- 4 406 804
- DE-A1- 19 546 385
- DE-U- 7 135 954
- GB-A- 728 169
- GB-A- 2 201 492

## Beschreibung

Die Erfindung betrifft ein magnetbetätigtes Absperrglied gemäß Oberbegriff des Patentanspruchs 1.

Bei einer aus der Praxis bekannten Vorrichtung dieser Art ist das magnetbetätigbare Absperrglied ein Kugelhahn, der bei Auftreten eines Signals aus einer Absperrstellung in eine Durchgangsstellung verdreht wird, und das Reservoir mit unter Versorgungsdruck stehender, zähflüssiger Flüssigkeit speist. Die Flüssigkeit ist z. B. Druckfarbe. Das Reservoir befindet sich an einer Druckstation einer Druckmaschine und wird aus einem Speicherbehälter über eine Pumpe versorgt, sobald die Füllmenge oder der Füllstand oder das Füllgewicht unter einen vorbestimmten Wert sinkt. Der Kugelhahn mit dem Betätigungsmagneten ist vielteilig und teuer.

Bei dem aus DE-A-4 317 706 (Fig. 5) bekannten Magnetsitzventil zur Verarbeitung von Drucköl ist zum Druckausgleich der Ventilachse der Stößelschaft kreiszylindrisch ausgebildet und in der zylindrischen Bohrung abgedichtet geführt, so dass zwischen dem Stößelschaft und dem die Ringdichtung durchsetzenden Dichtschaft eine an beiden Enden abgedichtete Ringkammer gebildet wird, in der der Versorgungsdruck wirkt. Dabei wirkt der Versorgungsdruck auf eine Kreisringfläche entsprechend der Differenz zwischen dem mit einer Ringdichtung versehenen Stößelschaft und dem Dichtschaft in Öffnungsrichtung auf das von der Federkraft in Schließrichtung beaufschlagte Schließglied, um bei geschlossenem Magnetsitzventil die Kraft des das Schließglied in Schließrichtung auf den Sitz pressenden Versorgungsdrucks zumindest weitgehend auszugleichen. Wird der Magnet stromlos gemacht, dann drückt die Federkraft das Schließglied auf den Sitz, und zwar zunächst ohne nennenswerte Unterstützung durch den Versorgungsdruck, da der am Schließglied in Schließrichtung wirkende Versorgungsdruck zumindest weitgehend von dem in entgegengesetzter Richtung auf dem Stößelschaft wirkenden Versorgungsdruck ausgeglichen ist. Das Magnetsitzventil ist für zähflüssige Flüssigkeiten nicht geeignet, die zum Verkleben oder Verharzen neigen, da flüssigkeitsbedingt der zylindrische Stößelschaft mit seiner Ringdichtung zum Festgehen in der zylindrischen Bohrung neigt, und die zuverlässige Einnahme der Schließstellung nur von der Federkraft abhängt und bei schwergängigem Stößel nicht gewährleistet ist.

Bei einem aus GB-A-728 169 bekannten Niederdruck-Ampullen-Füllventil für Flüssigkeiten unterschiedlicher Viskositäten wird das Schließglied direkt von der Magnetkraft beaufschlagt und sind im zylindrischen Außenumfang des Schließgliedes längs verlaufende Nuten eingeformt, um am Schließglied eine versorgungsdruckabhängige Öffnungskraft zu vermeiden und Raum zur Verdrängung der Flüssigkeit beim Öffnen und Schließen des Schließgliedes zu schaffen.

Bei einem aus GB-A-2 201 492 bekannten Magnetsitzventil zum Steuern der Strömung von Tinten-Druckfarbe wird das zylindrische Schließglied direkt von der Magnetkraft beaufschlagt, um gegen Federkraft von dem von einem Ende eines Auslasskanals gebildeten Sitz abzuheben. Die zylindrische Umfangswand des Schließgliedes ist mit allseitigem Spiel in einer unrunden Kammer angeordnet, so dass die Tinten-Druckfarbe am Schließglied vorbeiströmen kann und somit unter dem Versorgungsdruck keine axiale Kraftkomponente am Schließglied erzeugt.

Ein aus DE-A-44 06 804 bekanntes Magnetsitzventil enthält ein Schließglied, das über einen linear beweglich geführten Stößel mit der Magnetkraft beaufschlagbar ist. Da der Stößel mit seinem zylindrischen Außenumfang in die Führungsbohrung eingepasst ist oder sogar eine Gleitdichtung enthält, ist dieses Magnetsitzventil für zähflüssige Flüssigkeiten nicht geeignet, da solche Flüssigkeiten zum Verfestigen und Verharzen neigen und dann die Beweglichkeit des Stößels beeinträchtigen.

Bei einem aus DE-U-71 35 954 bekannten Magnetsitzventil wird das kugelförmige Schließglied von zwei koaxialen, an entgegengesetzten Seiten des Schließgliedes angreifenden, linear geführten Stößeln beaufschlagt. Da die Stößel mit ihren Stößelschäften exakt in die zylindrischen Führungsbohrungen eingepasst sind, ist dieses Magnetsitzventil nicht für zähflüssige Flüssigkeiten geeignet, die zum Aushärten und Verharzen neigen.

Aus DE 198 33 744 A ist ein Magnetsitzventil für Hydrauliköl bekannt, dessen Schließglied über einen Übersetzungshebel und einen Stößel vom Sitz abgehoben und bei stromlosen Magneten durch eine Schließfeder wieder in die Schließstellung gebracht wird. Das Magnetsitzventil ist entweder druckausgeglichen, d. h., der auf das Schließglied wirkende Versorgungsdruck erzeugt keine in Schließrichtung wirkende Kraftkomponente, oder druckunausgeglichen, d. h., der Versorgungsdruck erzeugt zumindest eine anteilige Schließkraft in Schließrichtung. Der Stößel ist mit dem zylindrischen Stößelschaft in einer zylindrischen Führungsbohrung verschiebbar geführt und nach außen abgedichtet, so dass der Stößelschaft zumindest bei abgehobenem Schließglied mit unter Druck stehendem Hydrauliköl beaufschlagt wird. Die Viskosität und das Schmierverhalten von Hydrauliköl haben keinen negativen Einfluss auf die Funktionsfähigkeit des Magnetsitzventils, d. h., sobald der Magnet stromlos ist, kehrt das Schließglied zuverlässig in die leckagefrei absperrende Schließstellung zurück. Für zähflüssige Flüssigkeiten ist dieses Magnetsitzventil jedoch nicht geeignet, da bei längerer Gebrauchsdauer, und vor allem bei längeren Pausen zwischen Nachspeisezyklen, der Stößel entweder durch die zähflüssige Flüssigkeit und/oder aufgrund unvermeidbarer Verunreinigungen festgeht, und das Magnetsitzventil nicht mehr ordnungsgemäß die Absperrstellung einnimmt.

Der Erfindung liegt die Aufgabe zugrunde, ein magnetbetätigtes Absperrglied der eingangs genannten Art anzugeben, bei dem trotz der Zähflüssigkeit der Flüssigkeit und/oder darin gegebenenfalls enthaltener Verunreinigungen die Absperrstellung zuverlässig erreicht wird, sobald der Magnet stromlos ist.

Die gestellte Aufgabe wird mit den Merkmalen des Patentanspruchs 1 gelöst.

Da in dem Magnetsitzventil bei vom Magneten vom Sitz abgehobenem Schließglied der Dichtschaft des Stößels durch den Versorgungsdruck in Schließrichtung beaufschlagt wird, und nicht nur die Schließfeder am Schließglied in Schließrichtung wirkt, nimmt das Schließglied jeweils dann zuverlässig seine leckagefreie Absperrstellung ein, wenn der Magnet stromlos gemacht wird. Der z.B. zum Speisen eines Reservoirs erforderliche Versorgungsdruck erfüllt hierbei die zusätzliche Funktion, das Magnetsitzventil bei Einnahme der Absperrstellung zu unterstützen. Das Magnetsitzventil ist dank der Unterstützung des Versorgungsdrucks zum Überführen des Schließgliedes in die Absperrstellung auch bei Verwendung für zähflüssige Druckfarben betriebssicher und zeichnet sich durch eine leckagefreie Absperrstellung aus. Zwischen dem Magneten und dem Schließglied ist der mit dem abgedichteten Dichtschaft, linear verschiebbare Stößel vorgesehen, der den Sitz durchsetzt und am Schließglied angreift, und der mit einem dem Sitz zugewandten Stößelschaft an einer Führungswand geführt wird. Im Stößelschaft sind mehrere in Verschieberichtung des Stößels verlaufende Nuten in Umfangsrichtung verteilt, die zwischen dem Stößelschaft und der Führungswand mehrere Führungsrippen begrenzen. Die Nuten im Stößelschaft resultieren in sehr kleinen Führungsflächen zwischen dem Stößelschaft und der Führungswand, so dass ein negativer Einfluss der zähflüssigen, gegebenenfalls kontaminierten Druckfarbe auf die zuverlässige Einnahme der Absperrstellung unterbleibt. Zweckmäßig sind die Nuten und Führungsrippen kombiniert mit der Unterstützung der Ventilschließfeder durch den Versorgungsdruck, indem der Versorgungsdruck durch die Nuten auf den Dichtschaft gebracht wird. Zweckmäßig ist jede Führungsrippe schmaler als eine benachbarte Nut. Ideal liegen zwischen dem Stößelschaft und der Führungswand nur linienförmige Kontaktbereiche vor, in denen sich keine Verschmutzungen oder verharzende Flüssigkeitsanteile festsetzen können. Die von dem Magnetsitzventil verarbeitete Flüssigkeit ist zweckmäßig Druckfarbe für eine Druckmaschine. Dank der in Schließrichtung wirkenden Kraft des Versorgungsdrucks und/oder dank der wegen der Nuten im Stößelschaft kleinen Führungsflächen gewinnen die Konsistenz der Druckfarbe und gegebenenfalls enthaltene Verunreinigungen oder Partikel wie Pigmente keinen schädlichen Einfluss auf die Funktionssicherheit des Magnetsitzventils.

Bei einer günstigen Ausführungsform ist die Führungswand zylindrisch und sind die Nuten im Stößelschaft Flachstellen im Umfangsverlauf des Stößelschaftes. Ausgehend von einem zylindrischen Stößelschaft lässt sich durch spanabhebende Bearbeitung eine hohe Maßgenauigkeit erzielen.

Konkret kann der Stößelschaft vier Führungsrippen und vier regelmäßig verteilte Flachstellen aufweisen.

Da gegebenenfalls bei hohem Versorgungsdruck der das Schließglied abhebende Magnet unerwünscht groß und leistungsstark ausgebildet werden müsste, ist bei einer zweckmäßigen Ausführungsform der Dichtschaft in einer in oder an der Führungswand angeordneten Ringdichtung angeordnet, deren Innen-Querschnitt etwa nur 40 % des Durchmessers des Sitzes für das Schließglied beträgt. Daraus resultiert, dass der Versorgungsdruck bei abgehobenem Schließglied den Dichtschaft mit einer kleineren Kraft belastet, als es der Querschnittsflache des Sitzes entspricht.

Zweckmäßig wird die dem Stößelschaft abgewandte Seite des Sitzes vom Versorgungsdruck beaufschlagt, während die dem Stößelschaft zugewandte Seite des Sitzes mit einem Reservoir kommuniziert.

Das magnetbetätigte Absperrglied ist nicht nur für Druckfarben verwendbar, sondern für jegliche zähflüssige Flüssigkeiten, mit denen unter einem bestimmten Versorgungsdruck, z. B. 120 bar, zyklisch ein Reservoir zu speisen ist. Beispiele solcher zähflüssigen Flüssigkeiten sind Schmierfett, Fruchtmark, Seifen, Sahne, oder dergleichen.

Anhand der Zeichnung werden Ausführungsformen des Erfindungsgegenstandes erläutert.

Es zeigen:
- Fig. 1: eine Schemadarstellung einer Vorrichtung zum Versorgen eines Reservoirs mit einer zähflüssigen Flüssigkeit,
- Fig. 2: einen Längsschnitt eines Magnetsitzventils, wie es in der Vorrichtung von Fig. 1 vorgesehen ist,
- Fig. 3: eine Seitenansicht eines Stößels des Magnetsitzventils, und
- Fig. 4: eine axiale Ansicht des Stößels von Fig. 3, und
- Fig. 5: eine Perspektivansicht des Stößels.

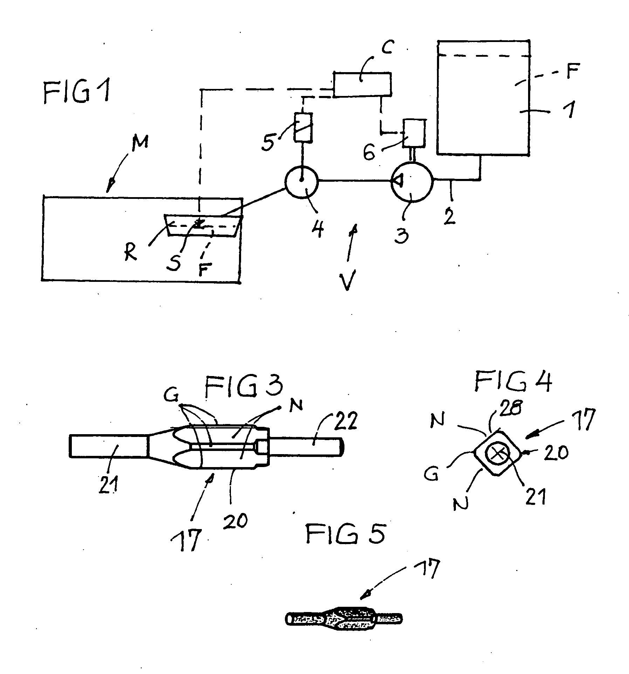

Fig. 1 zeigt schematisch eine Vorrichtung V zum Versorgen eines Reservoirs R mit einer zähflüssigen Flüssigkeit F aus einem Speicher 1. Das Reservoir R befindet sich beispielsweise an einer Druckmaschine M und hält einen Vorrat der Flüssigkeit zur Verarbeitung bereit. Der Füllstand, das Gewicht, die Menge oder dergleichen der im Reservoir R befindlichen Flüssigkeit wird durch einen Sensor S abgetastet und in ein Signal gewandelt, das einer Steuereinrichtung C zugeführt wird. Zwischen dem Speicher 1 und dem Reservoir R verläuft eine Versorgungsleitung 2, in der als Druckquelle eine Pumpe 3 und stromab der Pumpe 3 ein mittels eines Magneten 5 betätigbares Absperrglied 4 enthalten sind. Die Pumpe 3 wird von einem Motor 6 angetrieben, der an die Steuereinrichtung C angeschlossen sein kann, wie auch der Magnet 5 des Absperrglieds 4. Der Speicher 1 enthält beispielsweise eine größere Menge der Flüssigkeit F im gezeigten Ausführungsbeispiel einer Druckfarbe, die zähflüssig ist und gegebenenfalls Pigmente oder andere Zusatzstoffe enthält, und gegebenenfalls unvermeidbare Verunreinigungen, die aber in der Druckmaschine keine Rolle spielen.

Sobald der Sensor S feststellt, dass die im Reservoir R enthaltene Menge der Flüssigkeit F einen unteren Grenzwert unterschreitet oder zu unterschreiten droht, wird an die Steuereinrichtung C ein Signal geliefert. Die Steuereinrichtung C schaltet den Antrieb 6 der Pumpe 3 ein und auch den Magneten 5, so dass das Absperrglied aus einer Absperrstellung in eine Durchgangsstellung geht und Flüssigkeit F aus dem Speicher 1 in das Reservoir R gepumpt wird, bis der Sensor S erneut ein Signal abgibt und die weitere Versorgung unterbricht.

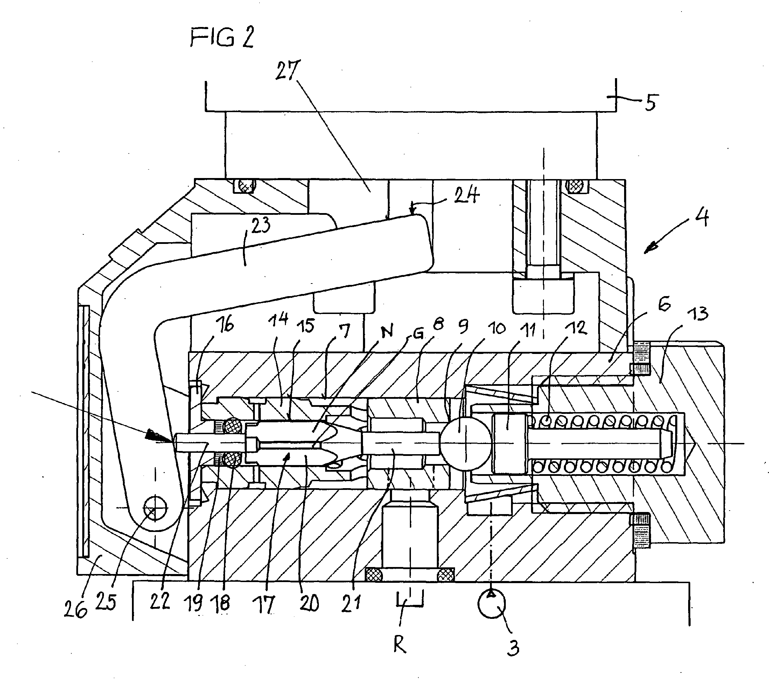

Das Absperrglied 4 ist ein magnetbetätigtes 2/2-Wege-Sitzventil, dass in Fig. 2 in einem Längsschnitt und in der Absperrstellung gezeigt ist.

In einem Gehäuse 6 ist eine Stufenbohrung 7 angeordnet, die an einem Ende durch eine Verschlussschraube 13 und am anderen Ende durch eine Verschlussscheibe 16 verschlossen ist. In etwa in der Mitte der Stufenbohrung 7 ist ein Ringeinsatz 8 angeordnet, der einen Sitz 9 für ein Schließglied 10, beispielsweise ein Stahlkugel oder eine Keramikkugel, bildet. Das Schließglied 10 wird von einem Stößel 11 beaufschlagt, der durch eine Schließfeder 12 in Schließrichtung des Schließglieds 10 beaufschlagt ist.

Im gegenüberliegenden Ende der Stufenbohrung 7 ist ein Ringeinsatz 14 festgelegt, der eine zylindrische Führungsbohrung 15 für einen darin linear verschiebbar geführten Stößel 17, beispielsweise aus Stahl, enthält. An der dem Sitz 9 abgewandten Seite ist in der Durchgangsbohrung 15 eine Ringdichtung, beispielsweise ein O-Ring 18, abgestützt durch einen Stützring 19, angeordnet, die von einem Dichtschaft 22 des Stößels 17 so durchsetzt wird, dass sich das freie Ende des Dichtschaftes 22 außerhalb des Gehäuses 16 befindet. Im Stößel 17 schließt sich an den Dichtschaft 22 an der der Ringdichtung 18 abgewandten Seite ein im Durchmesser größerer Stößelschaft 20 an, der sich über einen verjüngenden Zwischenabschnitt und einen Schaftteil 21 am Schließglied 10 angreift.

Zwischen dem Umfang des in der Durchgangsbohrung 15 linear geführten Stößelschafts 20 und der Innenwand der Durchgangsbohrung 15 sind mehrere in Umfangsrichtung verteilte, im Wesentlichen längsverlaufende Nuten N vorgesehen, zwischen denen längsverlaufende Führungsrippen G jeweils schmaler als die Nuten N definiert sind.

In der gezeigten Ausführungsform sind die Nuten N in den Außenumfang des Stößelschaftes 20 eingeformt, und werden die Führungsrippen G von verbleibenden streifen- oder linienförmigen Bereichen des eigentlich zylindrischen Außenumfangs des Stößelschaftes 20 gebildet. Bei einer nicht gezeigten Alternative könnten die Nuten und die Führungsrippen in der Durchgangsbohrung 7. geformt sein. Bei einer weiteren, nicht gezeigten Ausführungsform könnten die Nuten und die Führungsrippen sowohl im Stößelschaft 20 als auch in der Führungswand der Innenbohrung 15 ausgebildet sein.

Der Durchmesser des Dichtschaftes 22 ist kleiner als der Durchmesser des Sitzes 9. Die zur Ventilschließfeder 12 weisende Seite des Sitzes 9 steht mit der Pumpe 3 in Verbindung, während die zur Ringdichtung 18 weisende Seite des Sitzes 9 mit dem Reservoir R in Verbindung steht. Die Flüssigkeit F wird von der Pumpe 3 beispielsweise mit einem Versorgungsdruck von etwa 120 bar gepumpt. Der Versorgungsdruck wirkt zusammen mit der Kraft der Schließfeder 12 in Schließrichtung auf das Schließglied 10, wenn dieses leckagefrei auf den Sitz 9 aufsitzt (Absperrstellung). Wird das Schließglied 10 durch den Stößel 17 vom Sitz 9 abgehoben, dann wirkt der Versorgungsdruck auch über die Nuten N an der Ringdichtung 18 und dem Dichtschaft 22, so dass der Stößel 17 mit einer aus dem Querschnitt des Dichtschaftes 20 entsprechenden Druckkraft in Schließrichtung beaufschlagt wird. Kurz vor Erreichen der Absperrstellung wirkt im Wesentlichen der volle Versorgungsdruck auf das Schließglied 10 in Schließrichtung ein, so dass die gesamte Schließkraft der Summe dieser druckabhängigen Kraft und der Kraft der Schließfeder 12 entspricht, d. h., das Schließglied mit Nachdruck auf den Sitz 9 aufgesetzt und gehalten wird.

An dem Gehäuse 6 ist ein Außengehäuse 26 montiert, das den Magneten 5 (z.B. einen Schwarz/Weiß-Schaltmagneten) trägt, der mit einem Anker 24 auf einen in einem Raum 27 im Außengehäuse 26 angeordneten Übersetzungshebel 23 einwirkt. Der Übersetzungshebel ist um eine Achse 25 schwenkbar gelagert und greift am freien Ende des Dichtschaftes 20 an, wenn der Magnet 5 bestromt ist. In stromlosem Zustand des Magneten 5 wird der Übersetzungshebel 23 durch die Kraft des Stößels 17 und die der Schließfeder 12 in die gezeigte Endlage gebracht (gegebenenfalls ist ein Anschlag zum Definieren der Endlage vorgesehen).

Da das Schließglied 10 nicht druckausgeglichen ist, sondern in Schließrichtung vom Versorgungsdruck beaufschlagt wird, nimmt das Ventil bei stromlosem Magneten 5 trotz der Zähflüssigkeit der Flüssigkeit F die Absperrstellung zuverlässig ein. Dank der Nuten N der sehr schmalen Führungsrippen G können sich im Führungsbereich zwischen dem Stößelschaft 20 und der Innenwand der Durchgangsbohrung 15 keine Verunreinigungen oder Flüssigkeitsbestandteile festlegen, die die leichtgängige Beweglichkeit des Stößels 17 behindern würden.

Der Durchmesser des Dichtschaftes 22 beträgt in etwa 40 % des Durchmessers des Sitzes 9. Bei einem Durchmesser des Stößelschaftes von etwa 4 mm haben die Nuten N eine Weite von etwa 3,0 mm, und sind die Führungsrippen G nur etwa 0,5 mm breit.

Gemäß den Figuren 3, 4 und 5, die den Stößel 17 zeigen, werden die Nuten N durch Flachstellen 28 gebildet, zwischen denen die zylindrischen Umfangsrestbereiche des Umfangs des Stößelschaftes 20 verbleiben. Bei einem Ausgangsdurchmesser von etwa 4,0 mm des Stößelschaftes 20 definieren vier Flachstellen 28 eine Schlüsselweite von etwa 3,2 mm. Bei einer alternativen, nicht gezeigten Ausführungsform könnten die Nuten N auch konkav gerundet oder vertieft ausgebildet sein.

Da der Versorgungsdruck der Pumpe 3 auf das Schließglied 10 bzw. den Stößel 17 in Schließrichtung einwirkt, wird das Schließglied 10 sehr zuverlässig in die Absperrstellung gebracht, sobald der Magnet 5 stromlos ist. Diese Maßnahme, die Schließfeder 12 durch den Versorgungsdruck zu unterstützen, ist zweckmäßig kombiniert mit der Maßnahme der sehr schmalen Führungsrippen G des Stößelschaftes in der vom Versorgungsdruck beaufschlagten und die Flüssigkeit F enthaltenden Innenbohrung 15, um zu verhindern, dass die axiale Beweglichkeit des Stößels 17 durch Verharzungen, Verunreinigungen in der Flüssigkeit oder die Konsistenz der Flüssigkeit allgemein beeinträchtigt wird, und gegebenenfalls das zuverlässige Überführen des Schließgliedes 10 in die Absperrstellung beeinträchtigte.

Das Absperrglied 4 in Form des magnetbetätigten 2/2-Wege-Sitzventils ist nicht nur zum Versorgen eines Reservoirs mit Druckfarbe zweckmäßig, sondern stets dann einsetzbar, wenn eine zähflüssige Flüssigkeit zu verarbeiten und sicherzustellen ist, dass das Ventil seine Absperrstellung zuverlässig einnimmt.

## Patentansprüche

1. Magnetbetätigtes Absperrglied für unter Versorgungsdruck stehende Flüssigkeiten (F), wobei das Absperrglied ein Magnetsitzventil mit einem vom Magneten (5) durch einen zwischen dem Magneten (5) und einem Schließglied (10) angeordneten, mit einem Dichtschaft (22) in einer Ringdichtung (18) abgedichtet linear verschiebbaren Stößel (17) gegen Federkraft von einem Sitz (9) abhebbaren Schließglied (10) ist, und der Stößel (17) den Sitz (9) durchsetzt und mit einem dem Sitz (9) zugewandten Stößelschaft (20) in einer zylindrischen Bohrung (15) geführt ist, und das Schließglied (10) in Schließstellung vom Versorgungsdruck beaufschlagbar ist, **dadurch gekennzeichnet, dass** für zähflüssige Flüssigkeiten wie Druckfarben im Stößelschaft (20) mehrere, im Wesentlichen in Verschieberichtung des Stößels (17) verlaufende Nuten (N) in Umfangsrichtung verteilt sind, die zwischen dem Stößelschaft (20) und der Bohrung (15) Führungsrippen (G) begrenzen, und dass bei abgehobenem Schließglied (10) der Dichtschaft (22) über die Nuten (N) mit dem Versorgungsdruck in Schließrichtung des Schließgliedes (10) beaufschlagbar ist.

2. Magnetbetätigtes Absperrglied nach Anspruch (1), **dadurch gekennzeichnet, dass** die Nuten (N) Flachstellen (28) im zylindrischen Stößelschaft (20) sind.

3. Magnetbetätigtes Absperrglied gemäß Anspruch (2), **dadurch gekennzeichnet, dass** der Stößelschaft (20) zwischen vier Führungsrippen (G) vier regelmäßig verteilte Flachstellen (28) aufweist.

4. Magnetbetätigtes Absperrglied gemäß Anspruch 1, **dadurch gekennzeichnet, dass** der Durchmesser des Dichtschafts (22) etwa 40 % des Durchmessers des Sitzes (9) beträgt.

5. Magnetbetätigtes Absperrglied gemäß Anspruch (1), **dadurch gekennzeichnet, dass** die dem Stößelschaft (20) abgewandte Seite des Sitzes (9) vom Versorgungsdruck beaufschlagbar ist, und dass die dem Stößelschaft (20) zugewandte Seite des Sitzes (9) mit einem Reservoir (R) kommuniziert, das bei durch den Magneten (5) geöffnetem Magnetsitzventil mit der zähflüssigen Flüssigkeit versorgt wird.

## Claims

1. Magnet-actuated shut-off member for liquids (F) which are under supply pressure, the shut-off member being a magnetic seat valve with a closing member (10) which can be lifted off from a seat (9) counter to spring force by the magnet (5) by means of a tappet (17) arranged between the magnet (5) and the closing member (10) and displaceable linearly, sealed off by means of a sealing shank (22) in a ring seal (18), and the tappet (17) passing through the seat (9) and being guided in a cylindrical bore (15) by means of a tappet shank (20) facing the seat (9), and the closing member (10) being capable of being acted upon in the closing position by the supply pressure, **characterized in that,** for high-viscosity liquids, such as printing inks, a plurality of grooves (N) are distributed in the tappet shank (20) in the circumferential direction, which grooves run essentially in the direction of displacement of the tappet (17) and delimit guide ribs (G) between the tappet shank (20) and the bore (15), and **in that**, with the closing member (10) lifted off, the sealing shank (22) can be acted upon via the grooves (N) by the supply pressure in the closing direction of the closing member (10).

2. Magnet-actuated shut-off member according to Claim (1), **characterized in that** the grooves (N) are flat places (28) in the cylindrical tappet shank (20).

3. Magnet-actuated shut-off member according to Claim (2), **characterized in that** the tappet shank (20) has four regularly distributed flat places (28) between four guide ribs (G).

4. Magnet-actuated shut-off member according to Claim (1), **characterized in that** the diameter of the sealing shank (22) amounts to about 40% of the diameter of the seat (9).

5. Magnet-actuated shut-off member according to Claim (1), **characterized in that that** side of the seat (9) which faces away from the tappet shank (20) can be acted upon by the supply pressure, and **in that** that side of the seat (9) which faces the tappet shank (20) communicates with a reservoir (R) which is supplied with the high-viscosity liquid when the magnetic seat valve is opened by means of the magnet (5).

## Revendications

1. Organe d'arrêt à commande magnétique pour des fluides (F) sous pression d'alimentation, l'organe d'arrêt étant une vanne à siège magnétique comprenant un organe de fermeture (10) qui peut être soulevé d'un siège (9) par un aimant (5) contre une force de ressort par un poussoir (17) disposé entre l'aimant (5) et l'organe de fermeture (10) et déplaçable linéairement de façon étanche par une tige d'étanchéité (22) dans un joint annulaire (18), et le poussoir (17) traversant le siège (9) et étant guidé dans un alésage cylindrique (15) par une tige de poussoir (20) tournée vers le siège (9), et l'organe de fermeture (10) pouvant être sollicité par la pression d'alimentation en position de fermeture, **caractérisé en ce que**, pour des liquides visqueux tels que des encres d'imprimerie, plusieurs gorges (N) s'étendant essentiellement dans la direction de déplacement du poussoir (17) sont réparties dans la direction périphérique dans la tige de poussoir (20), lesquelles gorges délimitent des nervures de guidage (G) entre la tige de poussoir (20) et l'alésage (15), et que, en position de soulèvement de l'organe de fermeture (10), la tige d'étanchéité (22) peut être sollicitée par l'intermédiaire des gorges (N) avec la pression d'alimentation dans la direction de fermeture de l'organe de fermeture (10).

2. Organe d'arrêt à commande magnétique suivant la revendication 1, **caractérisé en ce que** les gorges (N) sont des méplats (28) dans la tige de poussoir cylindrique (20).

3. Organe d'arrêt à commande magnétique suivant la revendication 2, **caractérisé en ce que** la tige de poussoir (20) présente quatre méplats (28) régulièrement répartis entre quatre nervures de guidage (G).

4. Organe d'arrêt à commande magnétique suivant la revendication 1, **caractérisé en ce que** le diamètre de la tige d'étanchéité (22) atteint environ 40% du diamètre du siège (9).

5. Organe d'arrêt à commande magnétique suivant la revendication 1, **caractérisé en ce que** le côté du siège (9) opposé à la tige de poussoir (20) peut être sollicité par la pression d'alimentation, et que le côté du siège (9) tourné vers la tige de poussoir (20) communique avec un réservoir (R) qui est alimenté en fluide visqueux lorsque la vanne à siège magnétique est ouverte par l'aimant (5).
